# EUROPEAN PATENT APPLICATION

(11) **EP 4 468 537 A1**
(43) Date of publication of application: **27.11.2024**
(21) Application number: 22922046.2
(22) Date of filing: 08.11.2022
(51) Int. Cl.: H01S 1/06, G04F 5/14

(54) **ATOM BEAM GENERATION DEVICE, PHYSICS PACKAGE, PHYSICS PACKAGE FOR OPTICAL LATTICE CLOCK, PHYSICS PACKAGE FOR ATOMIC CLOCK, PHYSICS PACKAGE FOR ATOMIC INTERFEREROMETER, PHYSICS PACKAGE FOR QUANTUM INFORMATION PROCESSING DEVICE, AND PHYSICS PACKAGE SYSTEM**

(30) Priority: 19.01.2022 JP 2022006668
(71) Applicant: RIKEN, Wako-shi, Saitama 351-0198 (JP); JEOL Ltd., Akishima-shi, Tokyo 196-8558 (JP)
(72) Inventor: KATORI Hidetoshi, Wako-shi, Saitama 351-0198 (JP); TAKAMOTO Masao, Wako-shi, Saitama 351-0198 (JP); TSUJI Shigenori, Akishima-shi, Tokyo 196-8558 (JP)
(74) Representative: Boult Wade Tennant LLP
(86) International application number: PCT/JP2022/041615
(87) International publication number: WO 2023/139895

(57) **Abstract**

An atom beam generation device (100) comprises an atomic oven (102) including a reservoir (106) in which a sample (114) is contained, a deceleration unit (104), and coil units (110, 124). The deceleration unit (104) includes a bore (122) through which an atomic beam and a slowing laser beam (128) pass, and decelerates an atomic beam emitted from the atomic oven (102) by means of slowing laser beam and a magnetic field. The coil units (110, 124) supply Joule heat to the atomic oven (102), and generate a magnetic field in the deceleration unit (104).

## Description

### TECHNICAL FIELD

The present disclosure relates to an atomic beam generation apparatus, a physics package, a physics package for an optical lattice clock, a physics package for an atomic clock, a physics package for an atomic interferometer, a physics package for a quantum information processing device, and a physics package system.

### BACKGROUND

An optical lattice clock is an atomic clock which was proposed in the year 2001 by Hidetoshi Katori, one of the inventors of the present disclosure. In the optical lattice clock, an atomic cloud is entrapped within an optical lattice formed by a laser beam, and a resonance frequency of a visible light region is measured. Because of this, the optical lattice clock enables measurement with a precision of 18 digits, far exceeding precision of cesium clocks which are presently available. Optical lattice clocks are now eagerly being researched and developed by the group of the present inventors, and also by various groups in and out of Japan, and are now emerging as next-generation atomic clocks.

As recent techniques for the optical lattice clock, for example, Patent Documents 1 to 3 described below may be exemplified. Patent Document 1 describes that a one-dimensional moving optical lattice is formed inside an optical waveguide having a hollow passageway. Patent Document 2 describes a configuration in which an effective magic frequency is set. In fact, a magic wavelength is theoretically and experimentally determined for strontium, ytterbium, mercury, cadmium, magnesium, and the like. Patent Document 3 describes a radiation shield which reduces influences from black body radiation emanating from the walls at the periphery.

In the optical lattice clock, in order to perform time measurement with high precision, an altitude difference of 1 cm on the earth based on a general relatively effect due to the force of gravity can be detected as a deviation of progression of time. Thus, if the optical lattice clock can be made smaller and portable so that the optical lattice clock may be used in fields outside of a research laboratory, application possibilities can be widened for new geodetic techniques such as search for underground resources, underground openings, detection of magma reservoirs, and the like. By producing the optical lattice clocks on a massive scale and placing them in various places to continuously monitor a variation in time of the gravity potential, applications may be enabled such as detection of crustal movement and spatial mapping of a gravity field. In this manner, optical lattice clocks are expected to contribute to society as a new fundamental technology, beyond a frame of highly precise time measurement.

A typical physics package of an optical lattice clock includes an atomic oven and a Zeeman slower in the first stage. A cold atom beam is generated in the first stage. The generated cold atom beam is output to a magneto-optical trap apparatus (MOT apparatus), which is the second stage.

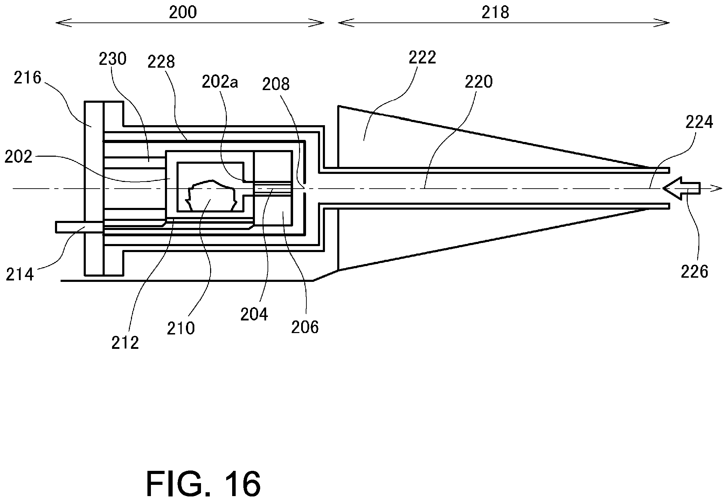

Next, the atomic oven and the Zeeman slower of the related art will be described with reference to FIG. 16. FIG. 16 shows an atomic oven and a Zeeman slower of the related art.

An atomic oven 200 includes a reservoir 202, a nozzle 204, a heater 206, and an opening 208. A sample 210 which is an atomic source is housed in the reservoir 202. The nozzle 204 is placed on an opening 202a of the reservoir 202. The heater 206 heats the nozzle 204 and the reservoir 202. When the sample 210 is heated by the heater 206, an atomic beam is generated. The atomic beam is emitted as an atomic beam through the opening 202a of the reservoir 202 and the nozzle 204, and through the opening 208. A thermometer 212 measures temperature of the atomic oven 200 heated by the heater 206.

In addition, electric wires for the heater 206 and the thermometer 212 extend via a terminal 214 to the outside of the atomic oven 200.

A flange 216 provided on the atomic oven 200 is mechanically connected to a flange placed in a physics package, and the atomic oven 200 and the physics package are hermetically sealed.

A Zeeman slower 218 includes a bore 220 and a magnetic field generator 222. The magnetic field generator 222 includes a solenoid coil, and generates a magnetic field along a center axis of the bore 220. The Zeeman slower 218 decelerates, through Zeeman deceleration, a velocity of an atomic beam emitted from the atomic oven 200 and having a high initial velocity, to a velocity at which the beam can be trapped by the magneto-optical trap apparatus (MOT apparatus) in the second stage.

A laser 226 is illuminated from an opening 224 of the bore 220 into the bore 220, from a direction opposite the direction of propagation of the atomic beam. The laser 226 is a laser having a frequency obtained by correcting a Doppler shift term from an atomic transition resonance frequency. Further, by forming, with the magnetic field generator 222, a magnetic field with a spatial gradient centered at the bore 220, a change of the Doppler shift due to the deceleration can be compensated for with the Zeeman shift, so as to achieve a situation in which the laser 226 for deceleration always resonates with respect to the atom.

In the Zeeman slower 218, the velocity of the atomic beam emitted from a tip of the nozzle 204 is decelerated by the magnetic field generated by the magnetic field generator 222 and the laser 226.

### CITATION LIST

### PATENT LITERATURE

Patent Document 1: JP 6206973 B
Patent Document 2: JP 6635608 B
Patent Document 3: JP 2019-129166 A

### SUMMARY

### TECHNICAL PROBLEM

Electric power saving and space saving will now be considered, in connection with the electric power consumed by the atomic oven 200 and the Zeeman slower 218.

### (1) Problem associated with Electric Power Saving

Electric power necessary for operating the atomic oven 200 in the related art and electric power necessary for operating the Zeeman slower 218 including the solenoid coil in the related art will now be considered.

As an example, the consumed electric power of the heater 206 included in the atomic oven 200 will be considered for a case in which strontium atoms are used as the sample 210.

The following conditions are presumed. The sample 210 has a temperature of 450°C. The sample 210 has a length of 10 mm. The sample 210 has a diameter of 10 mm. The sample 210 has a shape of a circular tube. The thermal emissivity of an outer circumference of the atomic oven 200 and the thermal emissivity of a thermal radiation shield 228 covering the reservoir 202 are 0.1. Three heat-insulating support bars 230 extending from the reservoir 202 to the flange 216 (that is, heat-insulating support bars 230 extending from a high-temperature side to a room-temperature side) are placed. Each heat-insulating support bar 230 has a diameter of 4 mm and a length of 20 mm, and is made of magnesia.

Under the conditions described above, an amount of heat discharged from the atomic oven 200 to the room-temperature side at the outside is calculated to be a total of 8.5 W. Of the total amount of heat, 0.42 W is derived from thermal radiation, and 8.0 W is derived from thermal conduction via the heat-insulating support bars 230.

When the magnetic field generator 222 of the Zeeman slower 218 is formed from the solenoid coil, Joule heat discharged from the solenoid coil will now be considered.

The inner diameter ϕ of the bore 220 is presumed to be 6 mm and the length of the bore 220 is presumed to be 50 mm. In addition, the magnetic field generator 222 is presumed to generate a decreasing magnetic field, and a capture velocity is presumed to be 250 m/s. The electric resistivity of the solenoid coil member is presumed to be 4.5 µΩcm. Under these conditions, the electric power consumption when the magnetic field is generated is calculated to be 9.5 W.

In this manner, it can be understood that the electric power necessary for the atomic oven 200 and the electric power consumed by the Zeeman slower 218 including the solenoid coil are of approximately the same order.

In the related art, the atomic oven 200 and the Zeeman slower 218 are separate apparatuses, and electric power is separately supplied to each. That is, a sum of the electric power described above (that is, a sum of the electric power necessary for the atomic oven 200 and the electric power consumed by the Zeeman slower 218) has been necessary for operating the physics package. In addition, in order to stabilize the temperature of the physics package during operation" heat exchange with a water cooler or air cooler has been necessary not only for the atomic oven 200, but also for the Zeeman slower 218.

### (2) Problem associated with Space Saving

In the configuration shown in Fig. 16, the location where the sample 210 is heated and the location of the Zeeman slower 218 are separated from each other. This is because conventional Zeeman slower 218 are not heat resistant. Therefore it is necessary to suppress the heat transfer from the high temperature part of the atomic oven 200 (for example, the heater 206) to the Zeeman slower 218 As a heat-insulation measure, the heat transfer cannot be sufficiently suppressed by simply providing thermal radiation shields and thermal insulation elements, and it has been necessary to separate the atomic oven 200 and the Zeeman slower 218 with a sufficient distance. For example, it has been necessary to separate the atomic oven 200 and the Zeeman slower 218 with a distance of about a few cm. As a result, a problem is caused in that the size of the atomic beam generation apparatus becomes large.

An advantage of the present disclosure lies in realizing electric power saving and space saving in an atomic beam generation apparatus.

### SOLUTION TO PROBLEM

According to one aspect of the present disclosure, there is provided an atomic beam generation apparatus comprising: an atomic oven including an atomic source, a reservoir which houses the atomic source, and an opening; a deceleration portion having a bore through which an atomic beam and a laser beam pass, and that decelerates, with a laser beam and a magnetic field, an atomic beam emitted from the atomic oven; and a coil portion that supplies Joule heat to the atomic oven and that generates a magnetic field in the deceleration portion.

According to the structure described above, heating of the atomic source and generation of the magnetic field for decelerating the atomic beam are realized by a coil portion. For example, a coil for generating the magnetic field for deceleration is also used for heating the atomic source, and both the heating of the atomic source and the deceleration of the atomic beam are realized by the coil. With this configuration, it is not necessary to provide a separate structure for heating the atomic source, and thus, electric power saving and space saving can be realized. For example, a Zeeman coil which generates a magnetic field in accordance with Zeeman deceleration is used. A part of the Zeeman coil is also used for heating the atomic source.

The opening of the atomic oven may be formed by a nozzle, and the nozzle may include one or a plurality of holes, one or a plurality of capillaries, or one or a plurality of slits, and may be configured to collimate the atomic beam..

The nozzle may be placed in a distribution of a magnetic field generated by the generation portion.

The coil portion may generate a magnetic field which becomes a maximum at a tip of the nozzle.

The coil portion may generate a magnetic field which decreases with increasing distance from the tip of the nozzle.

The coil portion may include a layered assembly which covers the nozzle.

The layered assembly may include a plurality of circular tubular ceramic members, which are nested, and a conductive wire wound around each of the plurality of circular tubular ceramic members.

According to another aspect of the present disclosure, there is provided a physics package including: the atomic beam generation apparatus; and a vacuum chamber surrounding a clock transition space in which atoms are placed.

According to another aspect of the present disclosure, there is provided a physics package for an optical lattice clock, comprising the physics package.

According to another aspect of the present disclosure, there is provided a physics package for an atomic clock, comprising the physics package.

According to another aspect of the present disclosure, there is provided a physics package for an atomic interferometer, comprising the physics package.

According to another aspect of the present disclosure, there is provided a physics package for a quantum information processing device for atoms or ionized atoms, comprising the physics package.

According to another aspect of the present disclosure, there is provided a physics package system comprising: the physics package; and a control apparatus that controls an operation of the physics package.

### ADVANTAGEOUS EFFECTS

According to an aspect of the present disclosure, electric power saving and space saving can be realized in an atomic beam generation apparatus.

### BRIEF DESCRIPTION OF DRAWINGS

FIG. 1 is a block diagram showing an overall structure of an optical lattice clock according to an embodiment of the present disclosure.
FIG. 2 is a diagram schematically showing a structure of an atomic beam generation apparatus according to a first embodiment of the present disclosure.
FIG. 3 is a perspective diagram showing a nozzle and a high magnetic field generation portion.
FIG. 4 is a perspective diagram showing the high magnetic field generation portion.
FIG. 5 is a perspective diagram showing a coil bobbin.
FIG. 6 is a perspective diagram showing the coil bobbin around which a coil wiring is wound.
FIG. 7 is a perspective diagram showing a specific example of the atomic beam generation apparatus according to the first embodiment of the present disclosure.
FIG. 8 is a cross-sectional diagram of FIG. 7.
FIG. 9 is a diagram showing a distribution of a magnetic field formed by the atomic beam generation apparatus according to the first embodiment of the present disclosure.
FIG. 10 is a diagram showing a calculation result of elastic deformation of the atomic beam generation apparatus.
FIG. 11 is a diagram showing a calculation result of a temperature distribution of the atomic beam generation apparatus.
FIG. 12 is a diagram schematically showing a structure of an atomic beam generation apparatus according to a second embodiment of the present disclosure.
FIG. 13 is a diagram schematically showing a structure of an atomic beam generation apparatus according to a third embodiment of the present disclosure.
FIG. 14 is a perspective diagram showing a specific example of the atomic beam generation apparatus according to the third embodiment of the present disclosure.
FIG. 15 is a cross-sectional diagram showing the atomic beam generation apparatus according to the third embodiment of the present disclosure.
FIG. 16 is a diagram schematically showing a structure of an atomic beam generation apparatus in the related art.

### DESCRIPTION OF EMBODIMENTS

### <Structure of Optical Lattice Clock>

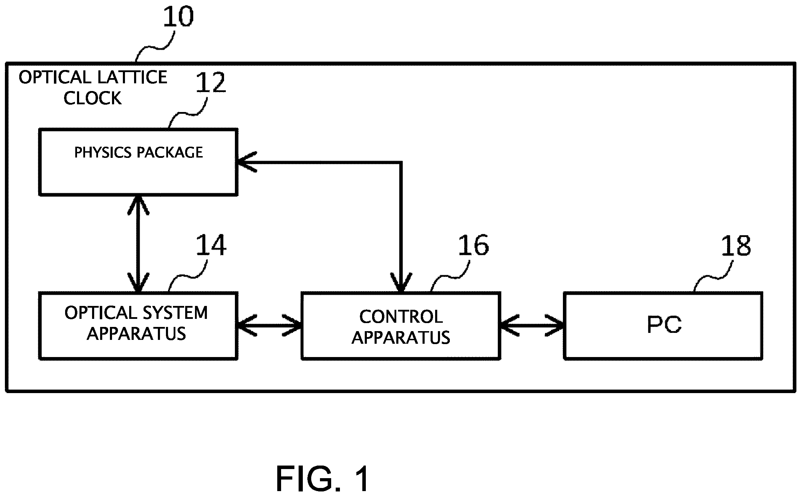

A schematic structure of an optical lattice clock 10 for which an atomic beam generation apparatus according to an embodiment of the present disclosure is used will now be described with reference to FIG. 1. FIG. 1 is a block diagram showing an overall structure of the optical lattice clock 10. Here, an optical lattice clock 10 will be described as an example of an apparatus for which the atomic beam generation apparatus is used, but alternatively, the atomic beam generation apparatus according to the embodiments of the present disclosure may be used for apparatuses other than the optical lattice clock 10.

The optical lattice clock 10 includes, for example, a physics package 12, an optical system apparatus 14, a control apparatus 16, and a PC (Personal Computer) 18.

The physics package 12 is an apparatus which traps an atomic cloud, entraps the atomic cloud in an optical lattice, and causes a clock transition. The optical system apparatus 14 is an apparatus having optical devices such as a laser beam source for cooling atoms, a laser beam source for trapping atoms, a laser beam source for exciting clock transition, a laser frequency control apparatus, and the like. The optical system apparatus 14 applies processes, in addition to sending a laser beam to the physics package 12, to receive a fluorescence signal emitted from the atomic cloud in the physics package 12, to convert the received signal into an electrical signal, and to feed back the same to the laser beam source so that the frequency matches the resonance frequency of the atom. The control apparatus 16 is an apparatus which controls the physics package 12 and the optical system apparatus 14. The control apparatus 16 applies, for example, operation control of the physics package 12, operation control of the optical system apparatus 14, and an analysis process such as frequency analysis of the clock transition obtained through measurement. The physics package 12, the optical system apparatus 14, and the control apparatus 16 cooperate with each other, to realize the functions of the optical lattice clock 10.

The PC 18 is a general-purpose computer including one or more processors and a memory. Software is executed by hardware including the one or more processors and the memory, to realize the functions of the PC 18. In the PC 18, an application program for controlling the optical lattice clock 10 is installed. The PC 18 is connected to the control apparatus 16, and may control not only the control apparatus 16, but also the entirety of the optical lattice clock 10 including the physics package 12 and the optical system apparatus 14. In addition, the PC 18 provides a UI (User Interface) of the optical lattice clock 10. A user can start the optical lattice clock 10, apply time measurement, and check results through the PC 18.

A system including the physics package 12 and a structure necessary for control of the physics package 12 may sometimes be called a "physics package system". The structure necessary for the control may be included in the control apparatus 16 or in the PC 18, or in the physics package 12. Alternatively, a part or all of the functions of the control apparatus 16 may be included in the physics package 12.

An atomic beam generation apparatus according to embodiments of the present disclosure will now be descried in detail. In the atomic beam generation apparatus of the embodiments, a heater for an atomic oven and a solenoid coil for Zeeman slower (hereinafter, also referred to as "Zeeman coil") are integrated, or partly used in a combined manner. That is, a part of the Zeeman coil of the embodiments functions as the heater for the atomic oven and heats the sample, and another part of the Zeeman coil functions as the Zeeman slower and decelerates the atomic beam.

### <Structure of Atomic Beam Generation Apparatus of First Embodiment>

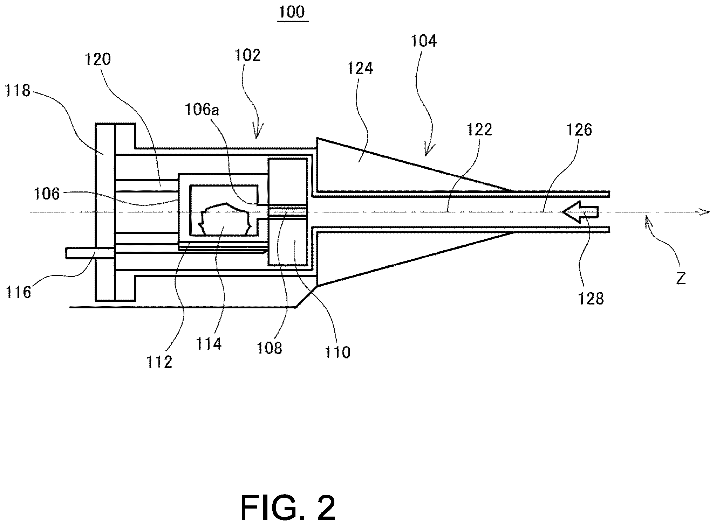

A structure of an atomic beam generation apparatus according to a first embodiment of the present disclosure will now be described with reference to FIG. 2. FIG. 2 is a diagram schematically showing a structure of an atomic beam generation apparatus 100 according to the first embodiment of the present disclosure. In the following, an axis parallel to a longitudinal direction of the atomic beam generation apparatus 100 will be called a "Z axis".

The atomic beam generation apparatus 100 is an apparatus which includes an atomic oven 102 and a deceleration portion 104. The atomic beam generation apparatus 100 generates atomic beam by heating a sample which is an atomic source. And the atomic beam generation apparatus 100 further decelerates the atomic beam with a slowing laser beam and a magnetic field.

The atomic oven 102 houses the sample, and generates the atomic beam by heating the sample. The deceleration portion 104 decelerates the atomic beam emitted from the atomic oven 102 with the slowing laser beam beam and the magnetic field.

The atomic oven 102 includes a reservoir 106, a nozzle 108, a high magnetic field generation portion 110, and a thermometer 112. Ultra high vacuum condition is maintained within atomic oven 102. With this configuration, the reservoir 106, the nozzle 108, the high magnetic field generation portion 110, and the thermometer 112 are placed in ultra high vacuum environment.

A sample 114 which is an atomic source is housed in the reservoir 106. The atomic beam is generated when the sample 114 is heated. As the atomic source, for example, strontium, ytterbium, or the like is employed. An opening 106a is formed on a surface of the reservoir 106, on a side of the deceleration portion 104. The vapor is emitted through the opening 106a to the outside of the reservoir 106.

The nozzle 108 is connected to the opening 106a of the reservoir 106. For example, the nozzle 108 comprises one or a plurality of holes, one or a plurality of capillaries, or one or a plurality of slits. The nozzle 108 only allows atoms with a low divergence angle to pass through the opening 106a. That is, the nozzle 108 is configured to collimate the atomic beam.

The high magnetic field generation portion 110 is formed from a part of the Zeeman coil, and functions as a heater which heats the sample 114. That is, a part of the Zeeman coil is used as the heater for heating the sample 114.

The high magnetic field generation portion 110 is placed in the atomic oven 102 in a manner to cover a side surface of the nozzle 108. More specifically, a coil wiring forming a part of the Zeeman coil is wound along the side surface of the nozzle 108. A number of windings of the coil wiring, and a current to be supplied to the coil wiring are adjusted so as to enable heating of the sample 114 and generation of the atomic beam.

As a material of the coil wiring forming the high magnetic field generation portion 110, in design, a good conductor such as, for example, silver or copper having low electric resistance is employed, in order to realize both the generation of the magnetic field and the heating of the sample 114. These materials are also suitable for placing in ultra-high vacuum, having low outgassing even at high temperatures.

The nozzle 108 and the reservoir 106 are heated by the Joule heat generated by the high magnetic field generation portion 110, the sample 114 in the reservoir 106 is in turn heated, and the vapor is generated. The vapor is emitted as an atomic beam through the nozzle 108, and from the tip of the nozzle 108.

The thermometer 112 measures the temperature of the atomic oven 102. For example, the thermometer 112 is placed at a side part of the reservoir 106, and measures the temperature.

In addition, electric wires for the high magnetic field generation portion 110 and the thermometer 112 extend via a terminal 116 to the outside of the atomic oven 102.

A flange 118 provided in the atomic oven 102 is mechanically connected to a flange placed in a physics package.

A heat-insulating support bar 120 is provided from the reservoir 106 to the flange 118. In order to prevent outflow of heat from the inside of the atomic oven 102 to the outside, for example, a material of a low thermal conductivity is used as a material of the heat-insulating support bar 120. More specifically, magnesia, steatite ceramic, or the like is used as the material of the heat-insulating support bar 120. For example, three heat-insulating support bars 120 are used.

The deceleration portion 104 uses a slowing laser beam and a magnetic field to decelerate the atomic beam with high initial velocity emitted from the atomic beam oven 102 to a velocity that can be captured by a magneto-optical trap (MOT) device in the second stage.

The deceleration portion 104 includes a bore 122 and a low magnetic field generation portion 124.

A position of the bore 122 is adjusted to a position corresponding to the tip of the nozzle 108, and the bore 122 extends along the Z axis.

The low magnetic field generation portion 124 is formed from a part of the Zeeman coil, and is placed along the bore 122 and on an outer circumference of the bore 122. The low magnetic field generation portion 124 is placed under atmospheric pressure. The low magnetic field generator 124 decelerates the atomic beam with high initial velocity emitted from the atomic beam oven 102 to a velocity that can be captured by the magneto-optical trap (MOT) device in the second stage.

As a material of the coil wiring forming the low magnetic field generation portion 124, for example, a good conductor is used. As a member for realizing electrical insulation between coil wirings, a typical coated copper wiring may be used.

The coil wiring forming the low magnetic field generation portion 124 is wound around the outer circumference of the bore 122 in such a manner that the low magnetic field generation portion 124 generates a magnetic field which decreases with increasing distance from the high magnetic field generation portion 110. In this manner, the Zeeman coil forms a decreasing magnetic field distribution.

The number of windings of the coil wiring per unit length with respect to the Z direction will now be described. For example, the coil wiring is wound around the outer circumference of the bore 122 in such a manner that the number of windings at the part of the low magnetic field generation portion 124 on the side of the nozzle 108 is the maximum, and gradually decreases with increasing distance from the tip of the nozzle 108. With this configuration, a magnetic field is formed in which the maximum magnetic field is formed at the part on the side of the nozzle 108, and the magnetic field decreases with increasing distance from the tip of the nozzle 108.

An opening 126 is formed on the bore 122, on a side opposite from the side of the high magnetic field generation portion 110. From the opening 126 into the bore 122, as shown by an arrow in FIG. 2, a slowing laser beam 128 is illuminated from a direction opposite the direction of propagation of the atomic beam emitted from the tip of the nozzle 108. The slowing laser beam 128 is a laser having a frequency obtained by correcting a Doppler shift term from an atom transition resonance frequency. Further, by applying, with the low magnetic field generation portion 124, the magnetic field having a spatial gradient centered at the bore 122, a change of the Doppler shift due to the deceleration of the atomic beam can be compensated for by the Zeeman shift, so that a situation can be created in which the slowing laser beam 128 for deceleration always resonates with respect to the atoms.

A generation portion is formed by the high magnetic field generation portion 110 and the low magnetic field generation portion 124. The generation portion generates the atomic beam by heating the sample 114 with the high magnetic field generation portion 110, and further generates a magnetic field for decelerating the atomic beam emitted from the tip of the nozzle 108. At the deceleration portion 104, the velocity of the atomic beam emitted from the tip of the nozzle 108 is decelerated with the magnetic fields generated by the high magnetic field generation portion 110 and the low magnetic field generation portion 124, and the slowing laser beam 128.

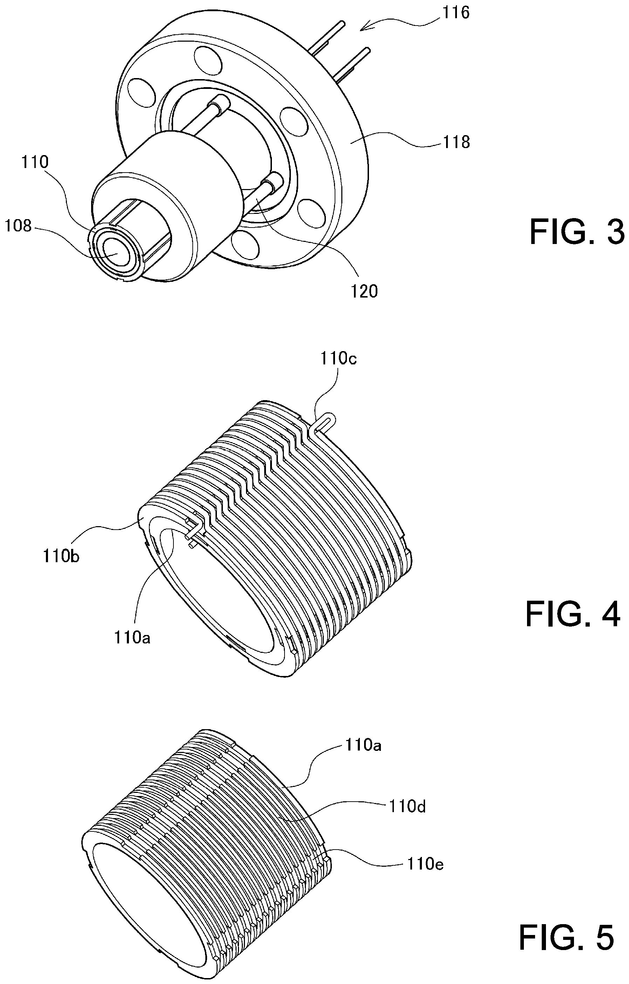

FIG. 3 shows the nozzle 108 and the high magnetic field generation portion 110. FIG. 3 is a perspective diagram showing the nozzle 108 and the high magnetic field generation portion 110. The nozzle 108 has a circular tubular shape. The coil wiring forming the high magnetic field generation portion 110 is wound around the outer circumference of the nozzle 108.

By placing the high magnetic field generation portion 110 around the nozzle 108 and actively heating the nozzle 108, it is possible to prevent clogging of the nozzle 108 by the atoms.

The high magnetic field generation portion 110 will now be described with reference to FIGs. 4 to 6. FIGs. 4 to 6 are perspective diagrams showing a structure of the high magnetic field generation portion 110.

As shown in FIG. 4, the high magnetic field generation portion 110 is formed from a layered assembly covering an outer circumference of the nozzle 108. The layered assembly includes a plurality of circular tubular coil bobbins (for example, coil bobbins 110a and 110b) which are nested, and a conductive wire (for example, a coil wiring 110c) wound around each of the plurality of coil bobbins. The diameter of the coil bobbin 110a is smaller than the diameter of the coil bobbin 110b. In the example configuration illustrated in FIG. 4, the coil bobbin 110a with the smaller diameter is placed in the coil bobbin 110b with the larger diameter. The coil bobbins 110a and 110b are coil bobbins formed from ceramic which is an insulating material. The coil bobbins 110a and 110b are examples of the ceramic member, and the coil wiring 110c is an example of the conductive wire.

FIG. 5 shows the coil bobbin 110a. A plurality of grooves 110d are formed along a circumferential direction on an outer circumferential surface of the coil bobbin 110a. In addition, a plurality of venting groove 110e are formed along a direction of extension of the coil bobbin 110a (that is, an axial direction of the circular tubular coil bobbin 110a) on the outer circumferential surface of the coil bobbin 110a. The plurality of venting groove 110e are placed with a spacing therebetween in a circumferential direction of the coil bobbin 110a. Similar to the coil bobbin 110a, a plurality of grooves 110d and a plurality of venting groove 110e are formed on the outer circumference of the coil bobbin 110b.

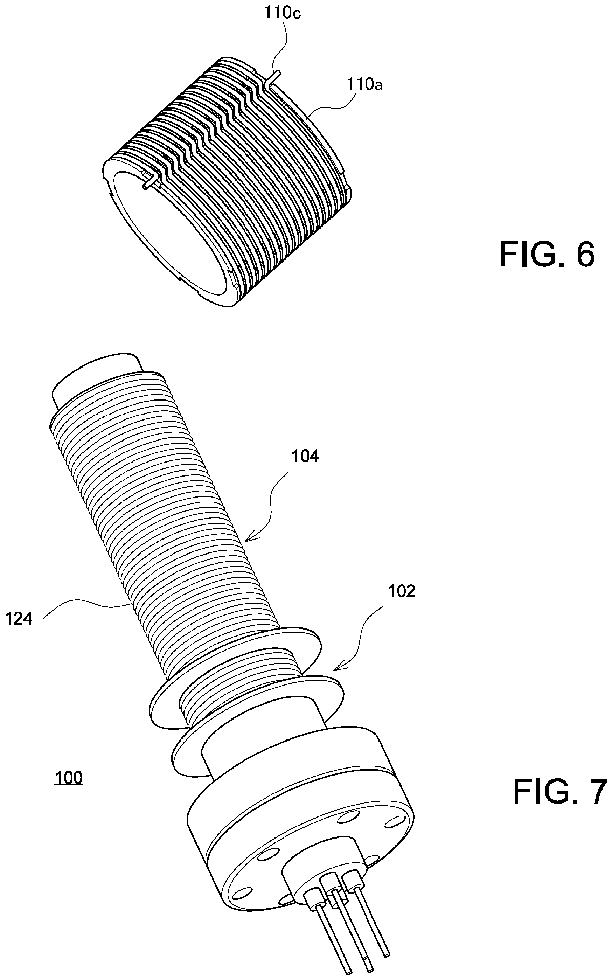

As shown in FIG. 6, the coil wiring 110c is fitted into the groove 110d formed on the outer circumferential surface of the coil bobbin 110a, so that the coil wiring 110c is wound on the outer circumferential surface of the coil bobbin 110a, and the coil is thereby formed. Similarly, for the coil bobbin 110b also, the coil wiring 110c is embedded in the groove 110d.

As the coil wiring 110c, for example, a bare conductive wire is used. Because the coil wirings 110 do not contact each other due to the groove 110d, even when the bare conductive wire is used, electrical insulation between the coil wirings 110c can be realized. When the heat resistance is allowable, a coil wiring (for example, a sheathed wire) coated with a resin such as a polyimide (for example, Kapton (registered trademark)) may be used as the coil wiring 110c. An insulating layer such as ceramic interposes between the core and the outer conductor of the sheathed wire, and the sheathed wire can be freely bent.

As shown in FIG. 4, by nesting the coil bobbins 110a and 110b around which the coil wiring 110c is wound (more specifically, by placing the coil bobbin 110a in the coil bobbin 110b), the layered assembly is formed. The layered assembly is used as the high magnetic field generation portion 110.

The coil bobbin 110a is a member of a first layer of the layered assembly, and the coil bobbin 110b is a member of a second layer of the layered assembly. For example, the number of windings of the coil wiring 110c per layer is 18. In the example configuration illustrated in FIG. 4, the number of layers of the layered assembly is 2, but alternatively, the number of layers may be 3 or more.

The venting groove 110e is formed in order to prevent the accumulation of residual gas in the groove 110d or the like and to promote venting when the plurality of layers (that is, the coil bobbins 110a and 110b) are nested.

The number of windings of the coil wiring 110c, the number of layers of the layered assembly, and the current supplied to the coil wiring 110c are adjusted so that a current is supplied to the coil wiring 110c forming the high magnetic field generation portion 110 in such a manner that the sample 114 can be heated by the heat generated by the supply of the current and the atomic beam can be generated. The number of windings of the coil wiring 110c, the number of layers of the layered assembly, and the current supplied to the coil wiring 110c may be changed according to a kind of the atom used as the sample 114. For example, when strontium is used as the sample 114, the number of windings of the coil wiring 110c, the number of layers of the layered assembly, and the current supplied to the coil wiring 110c are set such that strontium is heated by the heat generated by the high magnetic field generation portion 110 and the atomic beam is thereby generated.

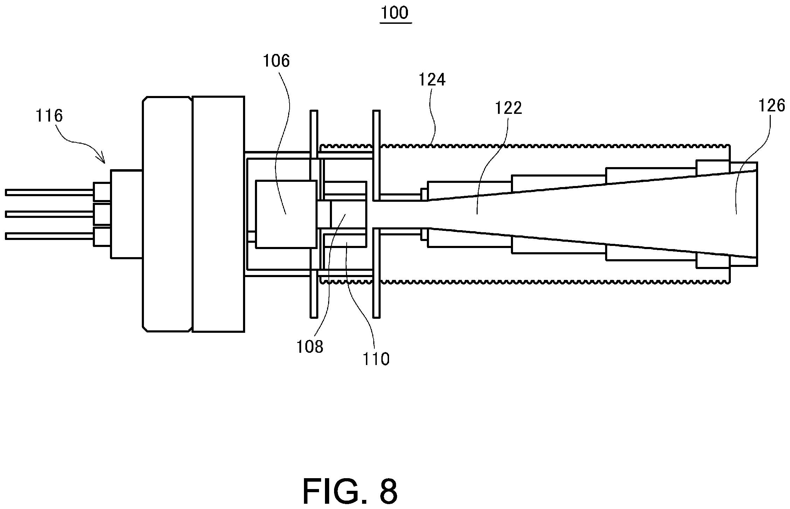

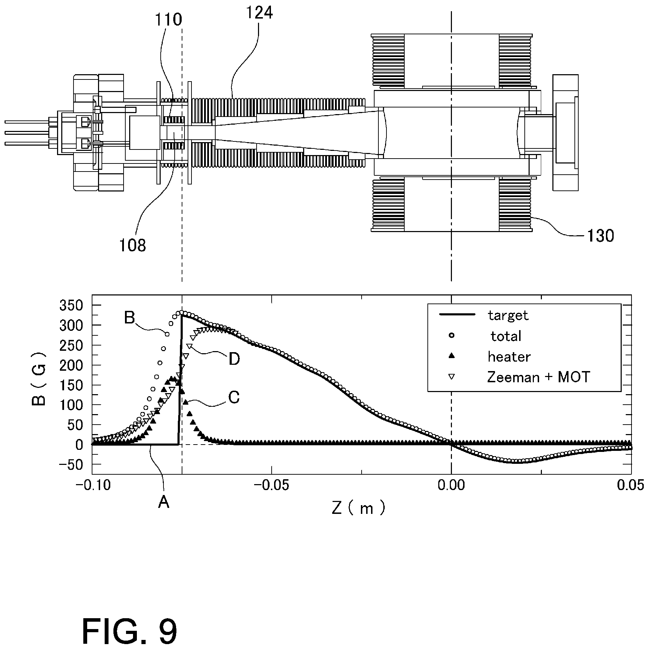

Advantages of the atomic beam generation apparatus 100 will now be described with reference to FIGs. 7 to 9. FIG. 7 is a perspective diagram showing a specific example of the atomic beam generation apparatus 100. FIG. 7 shows the outer appearance of the atomic beam generation apparatus 100. FIG. 8 is a cross-sectional diagram of FIG. 7. FIG. 9 shows a cross section of the specific example of the atomic beam generation apparatus 100, and distributions of the magnetic fields generated by the high magnetic field generation portion 110 and the low magnetic field generation portion 124.

In addition, FIG. 9 shows a magneto-optical trap apparatus (MOT apparatus) 130. The magneto-optical trap apparatus 130 is placed at a position beyond the opening 126 of the bore 122.

In the magnetic field distributions shown in FIG. 9, the horizontal axis shows a position on the Z axis with a magneto-optical trap position being zero. The vertical axis shows a strength of the magnetic field generated on the Z axis.

A curve A (curve shown with a solid line) is an ideal curve of the magnetic field with respect to distance, and is a curve showing a change of the magnetic field in accordance with the Zeeman deceleration. A curve B (curve shown with a plot of white circles) is a curve showing the strength of the magnetic field formed by the Zeeman coil forming the high magnetic field generation portion 110 and the low magnetic field generation portion 124, and is a curve showing a calculation result of the magnetic field with respect to distance. A curve C (curve shown with a plot of black triangles pointing upward) is a curve showing the strength of the magnetic field formed by the Zeeman coil forming the high magnetic field generation portion 110. A curve D (curve shown with a plot of white triangles pointing downward) is a curve showing the strength of the magnetic field formed by the Zeeman coil forming the low magnetic field generation portion 124. The magnetic field having the strength shown by the curve B is formed by the magnetic field having the strength shown by the curve C (that is, the magnetic field formed by the high magnetic field generation portion 110) and the magnetic field having the strength shown by the curve D (that is, the magnetic field formed by the low magnetic field generation portion 124). That is, of the curve B, the magnetic field shown by the curve C is the magnetic field contributed by the high magnetic field generation portion 110, and, of the curve B, the magnetic field shown by the curve D is the magnetic field contributed by the low magnetic field generation portion 124. The direction of the magnetic field is a direction parallel to an axis through which the atomic beam passes. The magnetic fields shown by the curves A and B also take into consideration a component of the magnetic field which is output from the magneto-optical trap apparatus 130 in the second stage. Here, as an example, the current supplied to the Zeeman coil and the coil in the magneto-optical trap apparatus 130 is 5 (A).

As shown by the curve B, the magnetic field generated by the Zeeman coil in the present embodiment becomes the maximum at the tip of the nozzle 108, and decreases from the tip of the nozzle 108 toward the magneto-optical trap apparatus 130, as the distance from the tip of the nozzle 108 increases. Also, the magnetic field shown by the curve B approximately coincides with the magnetic field shown by the ideal curve A. That is, the Zeeman coil according to the present embodiment (that is, the high magnetic field generation portion 110 and the low magnetic field generation portion 124) can form an ideal magnetic field distribution in accordance with the Zeeman deceleration. As such, the slowing laser beam 128 interacts with and decelerates the atomic beam without wasted space, from the verge of the tip of the nozzle 108.

That is, the number of windings of the coil wiring and the current supplied to the coil wiring at the high magnetic field generation portion 110 and the low magnetic field generation portion 124 are adjusted so that the sample 114 can be heated to generate the atomic beam, and so that the magnetic field is formed having the maximum strength at the tip of the nozzle 108 and having a strength which decreases in accordance with the Zeeman deceleration with increasing distance from the tip of the nozzle 108.

Even when the generation portion is separated into the high magnetic field generation portion 110 and the low magnetic field generation portion 124, a spatially continuous magnetic field distribution can be realized by placing the high magnetic field generation portion 110 and the low magnetic field generation portion 124 close to each other, and adjusting the number of windings of the coil wiring at the boundary between the high magnetic field generation portion 110 and the low magnetic field generation portion 124. For example, using a layering and shaping technique using a 3D printer for metals, the shape of a vacuum wall existing between the high magnetic field generation portion 110 and the low magnetic field generation portion 124 can be freely designed.

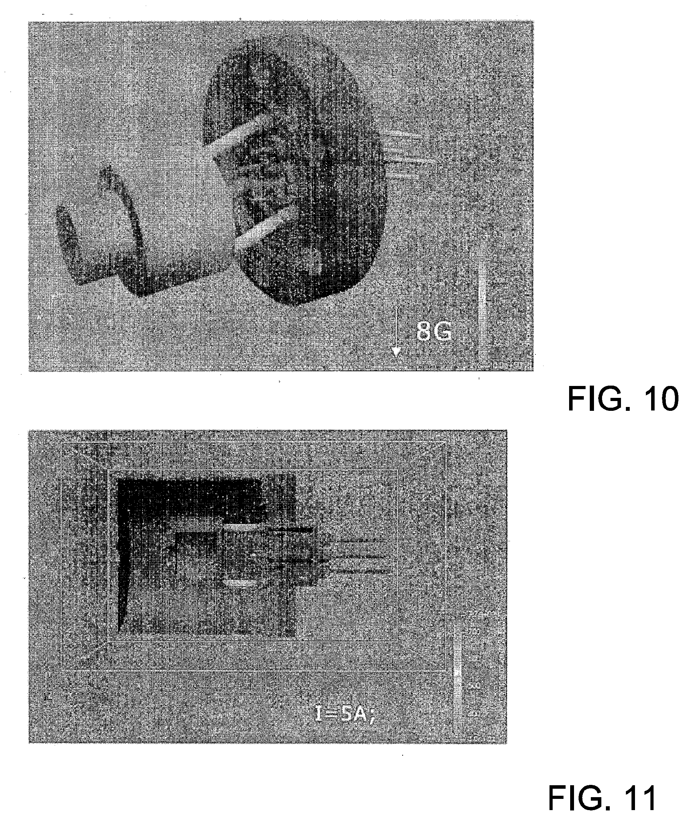

FIG. 10 is a diagram showing a result of elastic deformation of the atomic oven, directed to the specific example shown in FIGs. 7 and 8. The result of the elastic deformation is a result of elastic deformation when a force of gravity which is 8 times the gravitational acceleration acts on the atomic oven in a direction of an arrow in FIG. 10. For the purpose of facilitating visualization of the result, the amount of deformation is enlarged by a magnification of 10 thousand times. This result shows that the primary deformation is caused by deforming the insulating beam 120. For example, a length and a diameter of the heat-insulating support bar 120 are selected such that the deformation of the atomic oven is within an allowable range. One of the aspects of deformation which must be kept within the allowable range is an axis misalignment of the nozzle 108. If an axis of symmetry of the nozzle 108 is misaligned from the direction from the nozzle 108 toward the trapping position of the MOT apparatus (when axis misalignment occurs), the atomic beam would deviate from the trapping position of the MOT apparatus. When the angle of axis misalignment is θ, a distance from the nozzle 108 to the MOT apparatus is d, and a radius of an atomic cloud trapped by the MOT apparatus is r, θ must be within a range of θ<<r/d. In the example structure illustrated in FIG. 10, θ is about 0.001 radian, r is about 5 mm, and d is about 75 mm, and thus, the relationship of θ<<r/d is satisfied.

FIG. 11 is a diagram showing a calculation result of temperature directed to the specific example shown in FIGs. 7 and 8. More specifically, FIG. 11 shows a calculation result of the temperatures of the reservoir 106 and the nozzle 108 when a current of 5 (A) is supplied with a duty ratio of 50% to the Zeeman coil forming the high magnetic field generation portion 110 and the low magnetic field generation portion 124. The calculation result shows that the temperature of nozzle 108 and sample 114 reach 500°C (770K). The heat insulating support bar 120 allows a temperature difference between the flange 118, which is at room temperature, and the nozzle 108, which is at a high temperature.

According to the atomic beam generation apparatus 100 in the first embodiment, by supplying a current to the Zeeman coil (that is, the coil wiring forming the high magnetic field generation portion 110 and the coir wiring forming the low magnetic field generation portion 124), a magnetic field having the distribution shown in FIG. 9 is formed. That is, there is formed a magnetic field having the maximum at the tip of the nozzle 108, and decreasing in accordance with the Zeeman deceleration as the distance from the tip of the nozzle 108 increases.

By supplying the current to the coil wiring forming the high magnetic field generation portion 110, heat is generated, the nozzle 108 is heated by the heat, and the heat is conducted to the sample 114 in the reservoir 106. With this process, the sample 114 is heated and the vapor is generated.

The atomic beam generated due to the heating is emitted through the nozzle 108, and through the tip of the nozzle 108 toward the bore 122. In this manner, the vapor is emitted from the tip of the nozzle 108 as an atomic beam having a large initial velocity.

The slowing laser beam 128 is illuminated into the bore 122 from a direction opposite the direction of propagation of the atomic beam. In the deceleration portion 104, the atomic beam is decelerated by the magnetic field generated from the low magnetic field generation portion 124 and the high magnetic field generation portion 110, and the slowing laser beam 128. The decelerated atomic beam travels to the magneto-optical trap apparatus 130 in the second stage.

As described, according to the atomic beam generation apparatus 100 in the first embodiment, the sample 114 can be heated with the heat generated by the high magnetic field generation portion 110 which generates the magnetic field with high strength, and the vapor can thus be generated. In other words, the sample 114 can be heated and the vapor can be generated by the high magnetic field generation portion 110 forming a part of the Zeeman coil for generating the magnetic field for decelerating the atomic beam. Because of this, it is not necessary to use another heat source (for example, a dedicated heater) for heating the sample 114. This eliminates the power that may be required in the prior art, as shown in Fig. 16. In other words, because the heat which is inevitably generated when the magnetic field is generated in accordance with the Zeeman deceleration can be used for the heating of the sample 114, it becomes unnecessary to use a dedicated heater or the like for heating the sample 114, and electric power saving can thus be achieved.

In addition, because the Zeeman coil is partially shared between the atomic oven 102 and the deceleration portion 104, the space of the atomic beam generation apparatus 100 can also be saved, by an amount corresponding to the shared structure. That is, because the distribution of the magnetic field in accordance with the Zeeman deceleration can be formed from the tip of the nozzle 108 which is the emission port of atomic beam along the Z axis, the atomic beam can be decelerated while eliminating wasteful space. As a result, the space saving is realized, and the size of the atomic beam generation apparatus 100 can be reduced.

As described, with the atomic beam generation apparatus 100 according to the first embodiment, electric power saving and space saving can be realized.

### <Structure of Atomic Beam Generation Apparatus of Second Embodiment>

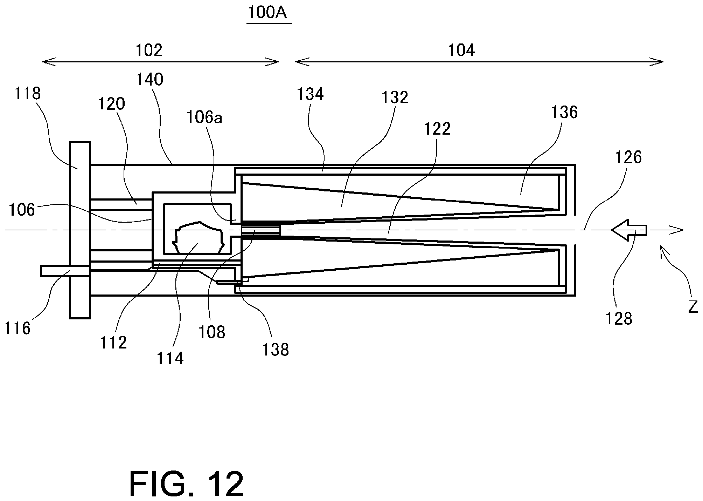

A structure of an atomic beam generation apparatus according to a second embedment of the present disclosure will now be described with reference to FIG. 12. FIG. 12 is a diagram schematically showing a structure of an atomic beam generation apparatus 100A according to the second embodiment.

In the second embodiment, an encapsulated Zeeman coil 132 is used. The nozzle 108 protruding from the opening 106a of the reservoir 106 is inserted into the bore 122. The Zeeman coil 132 is formed by winding a coil wiring around an outer circumference of the bore 122. The coil wiring is also wound around a portion into which the nozzle 108 is inserted. For example, the number of windings of the coil wiring is adjusted so that the strength of the magnetic field is the maximum at the tip of the nozzle 108, and decreases in accordance with the Zeeman deceleration as the distance from the tip of the nozzle 108 increases.

A cover 134 covering the Zeeman coil 132 is attached to the Zeeman coil 132. The cover 134 is fixed to the flange of the bore 122 through welding or the like. With this structure, a coil space 136 which is hermetically sealed is formed in the cover 134. The Zeeman coil 132 is placed in the coil space 136. In this manner, the Zeeman coil 132 is encapsulated.

As the coil wiring forming the Zeeman coil 132, for example, a coil wiring covered with a silicon fiber tube or the like having a high thermal resistance is used. With this structure, electrical insulation is maintained between the coil wirings. The coil wiring is extended to an outer side of the capsule via a feedthrough 138. For example, the coil wiring is connected to the terminal 116.

When a current is supplied to the coil wiring forming the Zeeman coil 132, heat is generated from the Zeeman coil 132, and the entire capsule is heated. The nozzle 108 and the reservoir 106 are heated with the heat generated from the Zeeman coil 132. In this manner, the sample 114 in the reservoir 106 is heated, and the vapor is generated. Similar to the first embodiment, the vapor is emitted as an atomic beam through the nozzle 108 into the bore 122. In the bore 122, the atomic beam is decelerated by the magnetic field generated by the Zeeman coil 132 and the slowing laser beam 128 illuminated through the opening 126 into the bore 122. The decelerated atomic beam is emitted from the opening 126, and travels to the magneto-optical trap apparatus in the second stage.

Alternatively, in order to suppress thermal radiation from the capsule including the Zeeman coil 132 to the outside, a thermal radiation shield 140 covering the capsule may be used.

According to the second embodiment, the heating of the sample 114 and the generation of the magnetic field for deceleration can be realized by the Zeeman coil 132. As a result, electric power saving and space saving can be realized.

### <Structure of Atomic Beam Generation Apparatus of Third Embodiment>

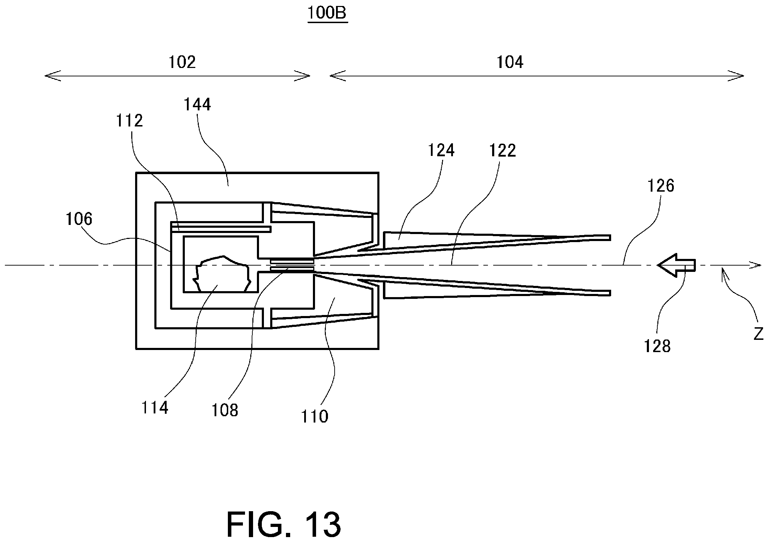

A structure of an atomic beam generation apparatus according to a third embodiment of the present disclosure will now be described with reference to FIG. 13. FIG. 13 is a diagram schematically showing a structure of an atomic beam generation apparatus 100B according to the third embodiment.

Similar to the first embodiment, the high magnetic field generation portion 110 forms a part of the Zeeman coil, and is placed on an outer circumference of the nozzle 108. The high magnetic field generation portion 110 heats the nozzle 108 and the reservoir 106, to thereby heat the sample 114 in the reservoir 106. The low magnetic field generation portion 124 forms a part of the Zeeman coil, and is placed on an outer circumference of the bore 122. Similar to the first embodiment, the high magnetic field generation portion 110 and the low magnetic field generation portion 124 generate a magnetic field having the maximum strength at the tip of the nozzle 108 and having the strength decreasing in accordance with the Zeeman deceleration as the distance from the tip of the nozzle 108 increases (refer to FIG. 9).

In the first embodiment, the high magnetic field generation portion 110 is placed in ultra high vacuum environment, but in the third embodiment, the high magnetic field generation portion 110 is placed in the atmosphere. For example, by covering the high magnetic field generation portion 110 with a heat-insulating member 144 such as a silicon fiber sheet, it becomes easier to handle the atomic beam generation apparatus 100B.

Further, by covering the coil wiring forming the high magnetic field generation portion 110 with a silicon fiber tube or the like having a high thermal resistance, electrical insulation between the coil wirings can be realized.

In the first embodiment, because the high magnetic field generation portion 110 is placed in the vacuum, a heat-insulating vacuum layer is formed between the high magnetic field generation portion 110 and the region on the side of the atmosphere.

On the other hand, in the third embodiment, the high magnetic field generating portion 110 is located in the atmosphere, so that heat transfer to other elements located in the atmosphere, such as the low magnetic field generating section 124 (also referred to as the 'room temperature part' for convenience), is dominated by heat transfer through air. If the entirety of the Zeeman coil is to be used for heating the sample 114, because of a large contact area of the Zeeman coil with respect to the air, the thermal conduction via air becomes more significant in comparison to the thermal conduction via the heat-insulating support bar 120. It may be possible to heat only part of the Zeeman coil by reducing the contact area between the strong magnetic field generation portion 110 and the air.

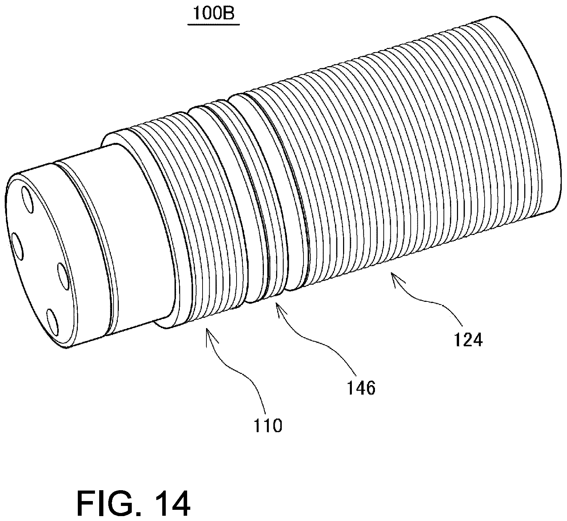

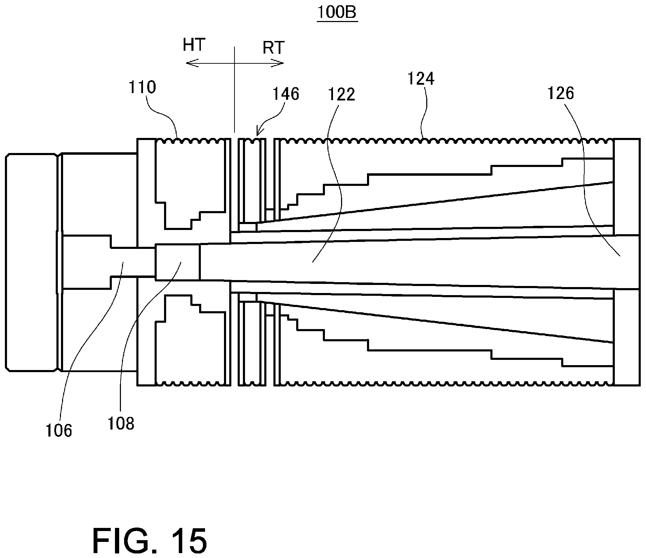

FIGs. 14 and 15 show a specific example of the third embodiment. FIG. 14 is a perspective diagram showing a specific example of the atomic beam generation apparatus according to the third embodiment. FIG. 15 is a cross-sectional diagram showing the specific example of the atomic beam generation apparatus according to the third embodiment.

In FIG. 15, "HT" shows a high-temperature part, and "RT" shows a room-temperature part. The high-temperature part corresponds to a part in which the high magnetic field generation portion 110 is placed, and the room-temperature part corresponds to the part in which the low magnetic field generation portion 124 is placed. Strictly speaking, the temperature of the room-temperature part is not limited to room temperature. In this sense, the "room-temperature part" corresponds to a part other than the part having the temperature increased due to the heating by the high magnetic field generation portion 110.

In the example structure shown in FIGs. 14 and 15, the high magnetic field generation portion 110 and the low magnetic field generation portion 124 are not in direct contact with each other via a metal, and are in contact with each other via a support member (for example, two support members) extending from the opening 126 of the bore 122 to the high magnetic field generation portion 110.

In addition, an intermediate part 146 is placed between the high magnetic field generation portion 110 and the low magnetic field generation portion 124. Similar to the low magnetic field generation portion 124, the intermediate part is formed by a coil wiring wound around an outer circumference of the bore 122. Due to the presence of the intermediate part 146, the heat transfer from the high magnetic field generation portion 110 to the low magnetic field generation portion 124 via the air or radiation can be suppressed.

Alternatively, the high magnetic field generation portion 110 and a part which is in direct contact therewith may be covered by a heat-insulating sheet such as glass fiber. With such a configuration, it becomes easier to handle the atomic beam generation apparatus 100B.

According to the third embodiment, similar to the first embodiment, electric power saving and space saving can be realized. In addition, the design of the vacuum chamber of the atomic beam generator 100B and the design of its vacuum system are simpler if the high magnetic field generator 110 is not in vacuum.

### <Structure of Physics Package 12>

A physics package 12 of an optical lattice clock according to an embodiment of the present disclosure will now be described. The physics package 12 includes the atomic beam generation apparatus 100 described above, a vacuum chamber surrounding the clock transition space in which the atoms are placed, and a mechanism which realizes the magneto-optical trap and the clock transition in the vacuum chamber. For the structures other than the atomic beam generation apparatus 100, known structures may be used. For example, the structures described in Patent Documents 1 to 3 described above may be used. An operation of the physics package 12 will now be described.

In the physics package 12, the inside of the vacuum chamber is set to be vacuum. A slow atomic beam sufficiently decelerated by the atomic beam generation apparatus 100 is emitted from the atomic beam generation apparatus 100, and reaches the magneto-optical trap apparatus (MOT apparatus) in the vacuum chamber. In the MOT apparatus, a magnetic field with a linear spatial gradient is formed, which is centered at a trap space in which the atoms are trapped, and a laser beam for magneto-optical trap is illuminated. With this process, the atoms are cooled and trapped. This is called a magneto-optical trap of atoms. The slow atomic beam reaching the MOT apparatus is further decelerated in the trap space, and, with this process, the atomic cloud is trapped in the trap space. In addition, the laser beam forming the optical lattice in an optical cavity installed in the vacuum chamber creates optical lattice potentials in the trap space, in which standing waves exist in the direction of propagation of the optical lattice laser beams. Atom clouds are trapped in the optical lattice potential.

By slightly changing a frequency of the opposing optical lattice laser beam, the optical lattice can be moved in the direction of propagation of the optical lattice light beam. With this moving means by the moving optical lattice, the atomic cloud is moved into a clock transition space. As a result, the clock transition space can be separated from a region exposed to thermal radiation from the high temperature part of the atomic beam generation apparatus 100, and a region exposed to high temperature atoms emitted from the atomic beam generation apparatus 100.

In the clock transition space, a laser beam whose optical frequency is controlled is illuminated to the atoms, high precision atomic spectroscopy and interrogation of the clock transition (that is, resonance transition of the atom which forms a reference of the clock) is performed, and an atomic specific frequency is measured. With this process, an accurate atomic clock is realized. Alternatively, in the case that it is not necessary to move the atomic cloud from the trap space to the clock transition space, the spectroscopy and interrogation may be performed in the trap space.

In order to improve the precision of the atomic clock, it is necessary to remove or reduce fluctuation around the atoms, and accurately read the frequency. Of particular importance is removal of a frequency shift caused by Doppler's effect due to thermal motion of the atoms. In the optical lattice clock, the motion of the atoms is frozen by trapping the atoms in the optical lattice created by interference of laser beams in a space sufficiently small in comparison to the wavelength of the clock laser. On the other hand, in the optical lattice, the frequency of the atom is shifted due to the laser beam forming the optical lattice. In this regard, a particular wavelength and a particular frequency called a "magic wavelength" or a "magic frequency" are selected for the optical lattice light beam so as to remove the influences of the optical lattice on the resonance frequency.

The light emitted as a result of the clock transition is received by the optical system apparatus 14, and spectroscopically processed or the like by the control apparatus 16, to determine the frequency.

In place of the atomic beam generation apparatus 100 of the first embodiment, the atomic beam generation apparatus 100A of the second embodiment or the atomic beam generation apparatus 100B of the third embodiment may be employed.

In the above description, the optical lattice clock has been exemplified. However, those skilled in the art can apply the techniques of the embodiments to structures other than the optical lattice clock. Specifically, the techniques may be applied to atomic clocks other than the optical lattice clock, or to an atomic interferometer which is an interferometer using atoms. For example, a physics package for an atomic clock or a physics package for an atomic interferometer including the atomic beam generation apparatus of any of the embodiments and the vacuum chamber may be formed. Further, the present embodiments can be applied to various quantum information processing devices for atoms or ionized atoms. The quantum information processing device is a device which performs measurement, sensing, and information processing using quantum states of atoms and light, and, in addition to the atomic clock and the atomic interferometer, there may be exemplified a magnetic field meter, an electric field meter, a quantum computer, a quantum simulator, a quantum relay, and the like. In a physics package for a quantum information processing device, with the techniques of the embodiments, size reduction or transportability can be achieved, similar to the physics package for the optical lattice clock. It should be noted that, in these devices, the clock transition space may be handled not as a space targeted for time measurement, but as a space in which atomic spectroscopy and interrogation of clock transition is caused.

In the description above, a specific configuration has been described in order to facilitate understanding. These descriptions, however, merely exemplify the embodiments, and various other embodiments are also possible.

### REFERENCE SIGNS LIST

10 optical lattice clock, 12 physics package, 14 optical system apparatus, 16 control apparatus, 100, 100A, 100B atomic beam generation apparatus, 102 atomic oven, 104 deceleration portion, 106 reservoir, 108 nozzle, 110 high magnetic field generation portion, 114 sample, 122 bore, 124 low magnetic field generation portion

## Claims

1. An atomic beam generation apparatus comprising:
an atomic oven including an atomic source, a reservoir which houses the atomic source, and an opening;
a deceleration portion having a bore through which an atomic beam and a laser beam pass, and that decelerates, with a laser beam and a magnetic field, an atomic beam emitted from the atomic oven; and
a coil portion that supplies Joule heat to the atomic oven and that generates a magnetic field in the deceleration portion.

2. The atomic beam generation apparatus according to claim 1, wherein
the opening of the atomic oven is formed by a nozzle, and
the nozzle includes one or a plurality of holes, one or a plurality of capillaries, or one or a plurality of slits, and is configured to collimate the atomic beam.

3. The atomic beam generation apparatus according to claim 2, wherein
the nozzle is placed in a distribution of a magnetic field generated by the coil portion.

4. The atomic beam generation apparatus according to claim 3, wherein
the coil portion generates a magnetic field which becomes a maximum at a tip of the nozzle.

5. The atomic beam generation apparatus according to claim 4, wherein
the coil portion generates a magnetic field which decreases with increasing distance from the tip of the nozzle.

6. The atomic beam generation apparatus according to claim 2, wherein
the coil portion includes a layered assembly which covers the nozzle.

7. The atomic beam generation apparatus according to claim 6, wherein
the layered assembly includes a plurality of circular tubular ceramic members, which are nested, and a conductive wire wound around each of the plurality of circular tubular ceramic members.

8. A physics package comprising:
the atomic beam generation apparatus according to claim 1; and
a vacuum chamber surrounding a clock transition space in which atoms are placed.

9. A physics package for an optical lattice clock, comprising:
the physics package according to claim 8.

10. A physics package for an atomic clock, comprising:
the physics package according to claim 8.

11. A physics package for an atomic interferometer, comprising:
the physics package according to claim 8.

12. A physics package for a quantum information processing device for atoms or ionized atoms, comprising:
the physics package according to claim 8.

13. A physics package system comprising:
the physics package according to claim 8; and
a control apparatus that controls an operation of the physics package.
